# EUROPÄISCHE PATENTANMELDUNG

(11) **EP 2 708 354 A1**
(43) Veröffentlichungstag der Anmeldung: **19.03.2014**
(21) Anmeldenummer: 12184107.6
(22) Anmeldetag: 12.09.2012
(51) Int. Cl.: B32B 5/20, B32B 27/40, B32B 5/24, B29C 44/32, B29C 70/48, C08G 18/18, C08G 18/32, C08G 18/66, F03D 1/06

(54) **Verfahren zur Herstellung von Sandwichelementen**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Verfahren zur Herstellung von Sandwichelementen, wobei die Sandwichelemente einen Polyurethanhartschaumstoff als Kernschaum enthalten, der von einem Verstärkungsmittellagen enthaltenden Kunststoffharz ganz oder teilweise umschlossen ist, bei dem man den Polyurethanhartschaumstoff auf den Verstärkungsmittellagen herstellt und anschließend die Verstärkungsmittellagen in einem flüssigen Harz tränkt und das Harz aushärtet. Weiter betrifft die vorliegende Erfindung Sandwichelemente, herstellbar nach einem erfindungsgemäßen Verfahren sowie die Verwendung dieser Sandwichelemente als Windrotorflügel, Tragfläche von Fluggeräten, Gondel für Windkraftanlagen, Bootsrumpf oder Gehäuse von Fahrzeugen.

## Beschreibung

Die vorliegende Erfindung betrifft Verfahren zur Herstellung von Sandwichelementen, wobei die Sandwichelemente einen Polyurethanhartschaumstoff als Kernschaum enthalten, der von einem Verstärkungsmittellagen enthaltenden Kunststoffharz ganz oder teilweise umschlossen ist, bei dem man den Polyurethanhartschaumstoff auf den Verstärkungsmittellagen herstellt und anschließend die Verstärkungsmittellagen in einem flüssigen Harz tränkt und das Harz aushärtet. Weiter betrifft die vorliegende Erfindung Sandwichelemente, herstellbar nach einem erfindungsgemäßen Verfahren sowie die Verwendung dieser Sandwichelemente als Windrotorflügel, Tragfläche von Fluggeräten, Gondel für Windkraftanlagen, Bootsrumpf oder Gehäuse von Fahrzeugen.

Großflächige Bauteile aus Metall werden in jüngster Zeit immer mehr durch Bauteile auf Basis von faserverstärktem Kunststoff ersetzt, da diese bei hoher mechanischer Stabilität gegenüber Metallbauteilen deutlich leichter sind. Ein großer Vorteil der Bauteile aus Kunststoff ist, dass sich Vorteile unterschiedlicher Kunststoffmaterialien, wie das geringe Gewicht von Kunststoffschäumen mit der hohen Stabilität von massiven, faserverstärkten Kunststoffen leicht verbinden lasst. Solche Sandwichbauteile werden beispielsweise als Tragflächen für Flugzeuge, Bootsrümpfe oder Rotorblätter für Windkraftanlagen eingesetzt.

Durch die zunehmend intensivere Nutzung der Windkraft und zur Erhöhung der Leistung von Windkraftanlagen werden immer mehr und größere Rotoren benötigt. Insbesondere bei Sturm müssen diese Rotoren extremen Belastungen standhalten. Als Rotormaterialien haben sich insbesondere Laminate aus einem Hartschaum als Kernmaterial und einem glasfaserverstärkten Harzmaterial als Außenschicht als geeignet erwiesen. Als Reaktivharze werden dabei hauptsächlich Epoxidharze oder Polyesterharze verwendet. Solche Sandwichmaterialien und deren Herstellung sind beispielsweise in WO 2012072687 beschrieben.

Dabei ist es insbesondere bei Flügeln von Windkraftanlagen essentiell, dass diese bei starken Belastungen elastisches Verhalten zeigen und sich zu einem gewissen Maß verbiegen können. Gleiches gilt für Tragflächen. Gleichzeitig sollen die Verstärkungsschäume den durch das Verbiegen auftretenden Scherkräften standhalten können.

Üblicherweise werden diese Sandwichstrukturen im Wesentlichen in Handarbeit aufgebaut, wobei die Kernschäume in kleinen vorkonfektionierten Stücken auf den Glasgelegen per Hand abgelegt und fixiert werden. Anschließend werden die Glasfasermatten in einem Harz getränkt, welches dann ausgehärtet wird. Ein solches Verfahren ist beispielsweise auch in WO 2012072687 beschrieben. Da sich die vorgefertigten Teile der Geometrie z.B. eines Windflügels nicht optimal anpassen lassen, kommt es bei der Harzinjektion zu Harzansammlungen im Schaumkern und unterschiedlichen Dicken in der Harzschicht, die zu Fehlstellen und Materialversagen im Betrieb führen können. Weiter ist dieses Verfahren sehr aufwändig und zeitintensiv.

Aufgabe der vorliegenden Erfindung war es, ein effizientes, zeitsparendes Verfahren zur Herstellung von großflächigen Sandwichelementen zu liefern, wobei Sandwichelemente mit hoher Stabilität und verringerter Fehleranfälligkeit erhalten werden.

Die erfindungsgemäße Aufgabe wird gelöst durch ein Verfahren zur Herstellung von Sandwichelementen, wobei die Sandwichelemente einen Polyurethanhartschaumstoff als Kernschaum enthalten, der von einem Verstärkungsmittellagen enthaltenden Kunststoffharz ganz oder teilweise umschlossen ist, bei dem man den Polyurethanhartschaumstoff auf den Verstärkungsmittellagen herstellt und anschließend die Verstärkungsmittellagen mit einem flüssigen Harz tränkt und das Harz aushärtet.

Erfindungsgemäße Sandwichelemente enthalten dabei einen Polyurethanhartschaumstoff als Kernmaterial. Dieser weist eine dichteunabhängige Druckfestigkeit nach DIN 53421/DIN EN ISO 604 von vorzugsweise größer 5,7*10⁻⁴ MPa (L/g)^{1,6}, einen dichteunabhängigen Druck-Elastizitätsmodul von vorzugsweise größer 1,0*10⁻² MPa (L/g)^{1,7}, eine dichteunabhängige Zugfestigkeit nach DIN 53292/DIN EN ISO 527-1 von vorzugsweise größer 5,7*10⁻⁴ MPa (L/g)^{1,6}, einen dichteunabhängigen Zug-Elastizitätsmodul von vorzugsweise größer 1,2*10⁻² MPa (L/g)^{1,7}, besonders bevorzugt 2,0*10⁻² MPa (L/g)^{1,7}, eine dichteunabhängige Biegefestigkeit nach DIN 53423 von vorzugsweise größer 1,0*10⁻³ MPa (L/g)^{1,6}, besonders bevorzugt 1,30*10⁻³ MPa (L/g)^{1,6} und einen dichteunabhängigen Biege-Elastizitätsmodul von vorzugsweise größer 8,8*10⁻³ MPa (L/g)^{1,7} auf. Weiter weist der erfindungsgemäße, verstärkte Polyurethanhartschaumstoff vorzugsweise eine dichteunabhängige Scherfestigkeit von größer 2,0*10⁻⁴ MPa (L/g)^{1,6} und besonders bevorzugt 4,0*10⁻⁴ MPa (L/g)^{1,6} auf. Die dichteunabhängige Druckfestigkeit wurde gemäß Druckfestigkeit * (Dichte)^{-1,6} und das dichteunabhängige Druck-E-Modul gemäß Druck-E-Modul * (Dichte)^{-1,7} berechnet. Dies bedeutet für einen erfindungsgemäßen Polyurethanhartschaumstoff bei einer Schaumdichte von 100 g/L eine Druckfestigkeit von vorzugsweise mindestens 0,9 MPa, besonders bevorzugt mindestens 1,2 MPa und ein Druck-E-Modul von vorzugsweise mindestens 25 MPa, besonders bevorzugt mindestens 40 MPa, eine Zugfestigkeit von vorzugsweise mindestens 0,9 MPa und ein Zug-E-Modul von vorzugsweise mindestens 30,1 MPa, besonders bevorzugt mindestens 50 MPa, eine Biegefestigkeit von vorzugsweise mindestens 1,58 MPa, besonders bevorzugt mindestens 2,05 MPa und ein Biege-E-Modul von vorzugsweise mindestens 22 MPa. Dabei weist der erfindungsgemäß verwendete verstärkte Polyurethanhartschaumstoff eine Dichte von größer 40 g/L bis 400 g/L, bevorzugt 70 g/L bis 250 g/L, besonders bevorzugt 100 g/L bis 220 g/L auf.

Besonders bevorzugt ist der Polyurethanhartschaumstoff ein überwiegend geschlossenzelliger Polyurethanhartschaumstoff. Dabei weist der erfindungsgemäße Polyurethanhartschaumstoff nach DIN ISO 4590 vorzugsweise mindestens 60%, besonders bevorzugt mindestens 70%, und insbesondere mindestens 90 % geschlossene Zellen auf. Neben den geschlossenen Zellen liegen geöffnete Zellen vor, das bedeutet, dass bei einer Geschlossenzelligkeit von 70 % die Offenzelligkeit 30 % beträgt.

In einer bevorzugten Ausführungsform enthält der erfindungsgemäße Polyurethanhartschaumstoff Verstärkungsmittel, wie Mikrohohlglaskugeln, Glasfasern, Aramidfasern, Kohlefasern oder Fasern aus Kunststoff. Auch ist es möglich, dass die Verstärkungsstoffe aus einer Kombination dieser Werkstoffe bestehen. Vorzugsweise enthalten die Polyurethanhartschaumstoffe Verstärkungsmittel in Form von Gelegen, Geweben oder Gewirken auf Basis von oben genannten Fasern. Insbesondere werden Matten aus Fasern wie Glasfasern, Aramidfasern, Kohlefasern oder Fasern aus Kunststoff, eingesetzt. In einer weiteren bevorzugten Variante enthält der erfindungsgemäße Polyurethanschaumstoff keine Verstärkungsmittel.

Der Anteil des Verstärkungsmittels beträgt vorzugsweise 1 bis 40 Gewichtsprozent, insbesondere 2-20 Gewichtsprozent, bezogen auf das Gesamtgewicht des harten Polyurethanschaumstoffs einschließlich Verstärkungsmittel.

Vorzugsweise wird der Polyurethanhartschaumstoff erhalten durch Vermischen von (a) Polyisocyanaten mit (b) Verbindungen mit gegenüber Isocyanaten reaktiven Gruppen (c) Treibmittel, enthaltend Wasser, und gegebenenfalls (d) Katalysator und (e) weiteren Additiven zu einer Reaktionsmischung und aushärten der Reaktionsmischung zum Polyurethanhartschaumstoff. Solche Polyurethanhartschaumstoffe und ein Verfahren zu deren Herstellung sind bekannt und beispielsweise in WO 2012072687 beschrieben.

Der Polyurethanhartschaumstoff ist dabei von Verstärkungsmittel enthaltendem Kunststoffharz ganz oder teilweise umschlossen. Vorzugsweise umschließt das Verstärkungsmittel enthaltende Kunststoffharz mindestens 50 % der Oberfläche des Polyurethanschaumstoffs, besonders bevorzugt 75 bis 100 % der Oberfläche und insbesondere 95 bis 100 % der Oberfläche. Dabei können als Verstärkungsmittel faserförmige Verstärkungsmittel, die lagenweise, beispielsweise durch Verknüpfung, miteinander verbunden sind, eingesetzt werden. In einer bevorzugten Ausführungsform bestehen die Verstärkungsmittellagen aus Gelegen, Geweben oder Gewirken auf Basis von Glasfasern, Aramidfasern, Kohlefasern oder Fasern aus Kunststoff. Solche Verstärkungsmittellagen sind bekannt und kommerziell erhältlich. Insbesondere sind die Verstärkungsmittel Glasfasermatten.

Als Kunststoffharz werden vorzugsweise Harze auf Basis von Epoxiden, Polyurethanen, Polyestern, Polyamiden oder Polyisocyanuraten eingesetzt. Solche Harze sind bekannt und die Ausgangsstoffe zur Herstellung dieser Harze sind kommerziell erhältlich.

Dabei wird der Polyurethanhartschaumstoff auf den Verstärkungsmittellagen hergestellt durch Aufbringen der Polyurethanreaktionsmischung zur Herstellung des Polyurethanschaumstoffs auf den Verstärkungsmittellagen und Aushärten der Reaktionsmischung zum Polyurethanschaumstoff.

Anschließend werden die Verstärkungsmittellagen ober bzw. unterhalb des Polyurethanhartschaumstoffs mit einem flüssigen Harz getränkt. Dabei werden als flüssiges Harz vorzugsweise Mischungen der Ausgangsstoffe zur Herstellung von Epoxydharzen, Polyesterharzen, Polyurethanharzen, Polyamidharzen oder Polyisocyanuratharzen eingesetzt. Diese flüssigen Harze sind allgemein bekannt und kommerziell erhältlich (z.B. Baxxores, Baxxodur oder Elastolit Harze der BASF). Sind die Fasern getränkt, werden die flüssigen Harze nach üblichen Verfahren, beispielsweise durch Eigenreaktion, Erwärmen oder Bestrahlen, gehärtet. In vielen Fällen genügt zum Härten des flüssigen Harzes bereits das Vermischen der Ausgangsverbindungen, beispielsweise von einer Harzkomponente mit einer Härterkomponente.

Vorzugsweise werden die erfindungsgemäßen Sandwichelemente hergestellt indem man (i) mindestens zwei Verstärkungsmittellagen in eine Form einlegt, (ii) eine Polyurethanreaktionsmischung zur Herstellung eines Hartschaumstoffs auf die Verstärkungsmittellagen gibt, wobei zumindest eine der Verstärkungsmittellagen für die Polyurethanreaktionsmischung zur Herstellung eines Hartschaumstoffs undurchlässig ist und die undurchlässige Verstärkungsmittellagen nicht die der Form zugewandte Lage ist, (iii) die Polyurethanreaktionsmischung zur Herstellung eines Polyurethanhartschaumstoffs zum Polyurethanhartschaumstoff ausreagieren lässt, (iv) die nicht von Polyurethan durchtränkten Verstärkungsmittellagen evakuiert, (v) flüssiges Harz in den evakuierten Verstärkungsmittellagen eindringen lässt, das flüssige Harz aushärtet und (vi) das erhaltene Sandwichelement entformt.

Dabei können übliche Formen eingesetzt werden, beispielsweise Formen aus Aluminium, die vorzugsweise beheizbar sind. Vorzugsweise handelt es sich um große Formen mit einer Formoberfläche von vorzugsweise mindestens 1 m², bevorzugt mindestens 5 m² und insbesondere mindestens 10 m². Nach oben ist die Fläche der Form nicht begrenzt, vorzugsweise sind die Formflächen aber kleiner als 400 m². Dabei kann es sich bei der Form um eine offene "Halbform", die nur einen Teil des Sandwichelements formt oder eine verschließbare "Vollform", beispielsweise eine Form mit Formunterteil und verschließbarem Formdeckel, handeln.

In die Form werden vorzugsweise mindestens zwei Verstärkungsmittellagen, vorzugsweise 2 bis 10, besonders bevorzugt 2 bis 6 und insbesondere 3 bis 5 Verstärkungsmittellagen eingelegt. Dabei können die oben beschriebenen Verstärkungsmittellagen eingesetzt werden. Vor dem Einlegen der Verstärkungsmittellagen kann ein übliches Formtrennmittel auf die Formoberfläche aufgetragen werden. Alternativ kann ein übliches Abreißgewebe eingelegt werden, das das Anhaften des fertigen Sandwichelements an die Formoberfläche verhindert.

Die Verstärkungsmittellagen werden schichtweise übereinander angeordnet. Dabei bedecken diese jeweils die gesamte Oberfläche der Form falls vorhanden inklusive Formdeckel, gegebenenfalls mit Ausnahme von Anschluss- oder Randstellen. Werden mehr als zwei Verstärkungsmittellagen in die Form eingelegt, bedecken zumindest zwei der eingelegten Verstärkungsmittellagen die gesamte Oberfläche der Form, während weitere Verstärkungsmittellagen auch nur Teile der Form bedecken können. Dadurch ist es beispielsweise möglich, das erfindungsgemäße Sandwichelement an besonders beanspruchten Bereichen gezielt zu verstärken. Die Verstärkungsmittellagen können an der Form befestigt sein, beispielsweise durch Anwendung von Vakuum.

Vorzugsweise ist eine der Verstärkungsmittellagen für die Reaktionsmischung zur Herstellung des Polyurethanhartschaumstoffs zum Zeitpunkt des Aufbringens auf die Verstärkungsmittellagen undurchlässig. Diese undurchlässige Verstärkungsmittellage ist dabei nicht die der Form zugewandte Verstärkungsmittellage und soll verhindern, dass alle Verstärkungsmittellagen bereits durch das Aufbringen der Polyurethanreaktionsmischung zur Herstellung des Polyurethanschaumstoffs vollständig benetzt werden und damit ein späteres Tränken mit dem flüssigen Harz nicht mehr möglich ist. Dabei wird im Rahmen der Erfindung die Mischung der Komponenten (a) bis (e) bei Reaktionsumsätzen kleiner 90 %, bezogen auf die Isocyanatgruppen, als Reaktionsmischung zur Herstellung des Polyurethanhartschaumstoffs bezeichnet.

Die für die Polyurethanreaktionsmischung zur Herstellung des Polyurethanhartschaumstoffs undurchlässige Verstärkungsmittellage kann beispielsweise durch besonders engmaschiges Verweben für die Reaktionsmischung undurchlässig werden. Auch ist es möglich, die Reaktionsmischung erst auf die Verstärkungsmittellagen aufzutragen, wenn die Viskosität der Reaktionsmischung bereits so weit angestiegen ist, dass diese die Glasfasermatte nicht mehr durchdringen kann. Alternativ kann die undurchlässige Verstärkungsmittellage auch durch Aufbringen eines Dichtmittels abgedichtet werden. Als Dichtmittel kann beispielsweise ein flüssiges Harz dienen, das auf die Verstärkungsmittellage aufgetragen und anschließend ausgehärtet wird. Vorzugsweise wird das flüssige Harz nur in solchen Mengen auf die Verstärkungsmittellage aufgetragen, dass nur diese Lage benetzt wird. Dies kann beispielsweise durch Tränken oder Aufsprühen erfolgen. Vorzugsweise wird das flüssige Harz auf die Verstärkungsmittellage aufgesprüht nachdem diese in die Vorm eingelegt wurde. Dabei können beispielsweise alle oben beschriebenen flüssigen Harze eingesetzt werden.

Das Harzsystem, mit dem die Verstärkungsmittelage abgedichtet wird, haftet vorzugsweise sehr gut am Polyurethanhartschaumstoff. Um die Haftung zu gewährleisten, wird vorzugsweise als Dichtmittel ein Polyurethanharz eingesetzt. Besonders bevorzugt wird als Dichtmittel ein Polyurethanharz eingesetzt, das das durch Verwendung des gleichen Isocyanats und das gleichen Polyols erhalten wird, die auch zur Herstellung der Reaktionsmischung zur Herstellung des Polyurethanhartschaumstoffs eingesetzt werden. Weiter kann ein bevorzugtes flüssiges Polyurethanharz beispielsweise in der Polyurethanchemie übliche Thixotropiermittel zur Erhöhung der Viskosität und/oder Katalysatoren zur Einstellung der Reaktionsgeschwindigkeit aufweisen. Die Menge des Harzsystems, das zum Abdichten der Verstärkungsmittellage auf diese aufgebracht wird ist nicht begrenzt, vorzugsweise aber gerade ausreichend, um die Verstärkungsmittellage gegen die Reaktionsmischung des Polyurethanhartschaumstoffs abzudichten. Beispielsweise wird das Harzsystem in einer Schichtdicke von 0,1 bis 5 mm, bevorzugt 0,4 bis 2 mm und insbesondere 0,6 bis 1,2 mm auf das Verstärkungsmittel aufgetragen. Unter Schichtdicke ist dabei die Dicker einer Schicht zu verstehen, die auf einer undurchlässigen, ebenen Fläche erhalten würde.

Von der Formoberfläche ausgehend können auf die für die Reaktionsmischung zur Herstellung des Polyurethanhartschaumstoffs undurchlässige Verstärkungsmittellage weitere Verstärkungsmittellagen folgen, die für die Reaktionsmischung zur Herstellung des Polyurethanhartschaumstoffs durchlässig sind. Wird diese Reaktionsmischung dann auf die Verstärkungsmittellagen aufgebracht, durchtränkt diese alle Verstärkungsmittellagen bis zur für diese Reaktionsmischung undurchlässige Verstärkungsmittellage. Beim anschließenden Aufschäumen der Reaktionsmischung zum Polyurethanhartschaumstoff werden die durchtränkten Verstärkungsmittellagen vom expandierenden Schaum mitgetragen, so dass diese im fertigen Polyurethanhartschaumstoff verteilt vorliegen und diesen im Innern verstärken. Werden Vollformen eingesetzt, werden die Verstärkungsmittellagen für den Polyurethanhartschaumstoff vorzugsweise nur im Formunterteil eingelegt.

Das Aufbringen des Polyurethanhartschaumstoffs auf die Verstärkungsmittellagen kann mit üblichen Mitteln, wie Gießen oder Sprühen, erfolgen. Anschließend wir die Reaktionsmischung zum Polyurethanhartschaumstoff ausreagieren lassen. Dies kann in der offenen Halbform als auch in der geschlossenen Vollform erfolgen. Gegebenenfalls kann das Ausreagieren durch Erwärmen beschleunigt werden.

Wird in der offenen Halbform gearbeitet, kann es erforderlich sein, die Oberfläche des erhaltenen Polyurethanhartschaumstoffs, die nicht von der Formoberfläche und den eingelegten Verstärkungsmittellagen vorgegeben ist, nachzuarbeiten, beispielsweise zu glätten. Dies kann beispielsweise durch eine Handfräse oder eine programmierbare CNC-Fräse erfolgen. Anschließend werden vorzugsweise auf die Oberfläche des erhaltenen Polyurethanhartschaumstoffs, die nicht von der Form vorgegeben ist, weitere1 bis 10, vorzugsweise 2 bis 6 und insbesondere 3 bis 5 Verstärkungsmittellagen gegeben.

Tränken und Aushärten der verbleibenden Verstärkungslagen erfolgt vorzugsweise nach dem sogenannten Vakuuminfusionsverfahren. Dieses Verfahren ist allgemein bekannt. Die Verstärkungsmittellagen, die noch nicht von Polyurethan benetzt sind, werden evakuiert. Daraufhin lässt man flüssiges Harz in die evakuierten Verstärkungsmittel eindringen und härtet dieses aus. Zum besseren Verteilen des flüssigen Harzes in den Verstärkungsmittellagen kann ein in der Vakuuminfusion übliches Gewebe zur Verbesserung der Durchflussmenge, beispielsweise ein Fließnetz, eingesetzt werden. Das Abdichten der Form kann mittels einer vakuumdichten Folie erfolgen. Neben dem Vakuuminfusionsverfahren können auch weitere, bekannte Verfahren eingesetzt werden, die ein Tränken der verbleibenden Verstärkungsmittellagen bewirken.

Vorzugsweise werden die erfindungsgemäßen Sandwichelemente in einer Vollform hergestellt. Dabei wird der Formdeckel nach dem Auftragen der Reaktionsmischung zur Herstellung des Polyurethanhartschaumstoffs geschlossen. Der in der Form definierte Hohlraum wird durch die aufschäumende Reaktionsmischung ausgefüllt. Die Menge der Polyurethanreaktionsmischung wird dabei vorzugsweise so berechnet, dass eine komplette Formfüllung gewährleistet ist. Nach Aushärten des Polyurethanhartschaumstoffs wird die Form vorzugsweise geöffnet und die zur Vakuuminfusion der verbleibenden Verstärkungsmittellagen erforderlichen Hilfsmittel werden angebracht. Diese können ein Gewebe zur Fließhilfe und eine Vakuumfolie umfassen. Anschließend werden die verbleibenden Verstärkungsmittellagen mit dem flüssigen Harz getränkt und das Harz wird ausgehärtet. Schließlich kann das fertige Sandwichelement entformt und gegebenenfalls vorhandene Abreißgewebe entfernt werden.

Im Rahmen der Erfindung werden als Verstärkungsmittellagen faserförmige Verstärkungsmittel, die lagenweise, beispielsweise durch Verknüpfung, miteinander verbunden sind. In einer bevorzugten Ausführungsform bestehen die Verstärkungsmittellagen aus Gelegen, Geweben oder Gewirken auf Basis von Glasfasern, Aramidfasern, Kohlefasern oder Fasern aus Kunststoff. Solche Verstärkungsmittellagen sind bekannt und kommerziell erhältlich. Insbesondere werden Glasfasermatten eingesetzt.

Das erfindungsgemäße Verfahren eignet sich insbesondere zur Herstellung großer Sandwichelemente. Vorzugsweise weisen die erfindungsgemäßen Sandwichelemente ein Volumen von mindestens 0,1 m³, besonders bevorzugt mindestens 0,5 m³ und insbesondere mindestens 1 m³ auf.

Weiter ist ein Sandwichelement, herstellbar nach einem erfindungsgemäßen Verfahren, Gegenstand der vorliegenden Erfindung. Ein solches Sandwichelement kann beispielsweise eingesetzt werden als Windrotorflügel, Tragfläche von Fluggeräten, Gondel für Windkraftanlagen, Bootsrumpf oder Gehäuse von Fahrzeugen. Erfindungsgemäße Sandwichelemente sind leicht, weisen hervorragende mechanische Beständigkeit auf und sind einfach zu fertigen. Insbesondere wird das Auftreten von Fehlstellen, die bei hoher Belastung zum Versagen des Sandwichelements führen können, deutlich verringert.

Im Folgenden wird die Erfindung anhand von Beispielen verdeutlicht:

Beispiele von erfindungsgemäßen Polyurethanhartschaumstoffen

**Tabelle 1:**

| | 1 | 2 | 3 | 4 | 5 | 6 |
|---|---|---|---|---|---|---|
| Polyether 1 | 31 | 31 | 31 | 40 | | |
| Polyether 2 | | | | 25 | | |
| Polyether 3 | | | | | 28 | 28 |
| Polyether 4 | | | | | 20 | 20 |
| Polyester 1 | 56 | 28 | 28 | 25 | 37 | 17 |
| Kettenverlängerer 1 | 10 | 10 | 10 | 10 | 12 | 12 |
| Kettenverlängerer 2 | | 28 | 28 | | | |
| Aromatisches Diol | | | | | | 20 |
| Glycerin | 3 | 3 | 3 | | | |
| Wasser | 1,4 | 1,45 | 1,45 | 1,0 | 2,0 | 2,0 |
| Katalysator 1 | 0,11 | 0,07 | 0,07 | 0,08 | | |
| Stabilisator 1 | 2,0 | 2,0 | 2,0 | 1,5 | 1,0 | 1,0 |
| Isocyanat 1 | 166 | 183 | 183 | 126 | | |
| Isocyanat 2 | | | | | 142 | 152 |
| Lagen Glasfasermatten im Schaum | | | 7 | | | |
| Glashohlkugeln | | | | | 17 | 8,2 |
| Schaumdichte in g/L | 100 | 100 | 100 | 100 | 100 | 100 |
| Druckfestigkeit in MPa | 1,03 | 0,94 | 1,24 | 0,91 | 1,42 | 1,39 |
| Druck-E-Modul in MPa | 27,7 | 26,6 | 48,2 | 24,8 | n.b | n.b |
| Zugfestigkeit in MPa | 1,28 | 1,22 | 1,39 | n.b. | 1,11 | 1,16 |
| Zug-E-Modul in MPa | 41,3 | 36,5 | 99,3 | n.b. | n.b | n.b |
| 3-Punktbiegefestigkeit in MPa | n.b. | 1,78 | 2,85 | 1,62 | 2,03 | 2,11 |
| 3-Punktbiege-E-Modul in MPa | n.b. | 23,8 | 47,3 | n.b. | n.b | n.b |
| Scherfestigkeit in MPa | 1,02 | 0,94 | 0,90 | 0,83 | n.b | n.b |

Dabei wurden folgende Einsatzstoffe verwendet:
- Polyether 1:: Saccharose-basiert, Fn = 4,5, zahlenmittleres Molekulargewicht = 515 g/mol, Viskosität = 8000 mPa*s bei 25°C
- Polyether 2:: Polypropylenglykol, Fn = 2, zahlenmittleres Molekulargewicht = 1100 g/mol, Viskosität = 150 MPa*s bei 25°C
- Polyether 3:: Ethylendiamin-basiert, Fn = 3.9, zahlenmittleres Molekulargewicht = 470 g/mol, Viskosität = 4975 MPa*s bei 25°C
- Polyether 4:: Ethylendiamin-basiert, Fn = 4.0, zahlenmittleres Molekulargewicht = 300 g/mol
- Polyester 1:: Phthalsäureanhydrid/Diethylenglykol-basiert, Fn = 2, zahlenmittleres Molekulargewicht = 360 g/mol
- Kettenverlängerer 1:: Propylenglykol-basiert, Fn = 2, Molekulargewicht = 134 g/mol
- Kettenverlängerer 2:: Propylenglykol-basiert, Fn = 2, MW = 190 g/mol
- Aromatisches Diol:: Bisphenol-A gestartetes Polyetherpolyol auf Basis von Propylenoxyd, Fn = 2, zahlenmittleres Molekulargewicht 400 g/mol
- Katalysator 1:: tertiäres aliphatisches Amin
- Stabilisator 1:: silikonhaltiger Stabilisator für Polyurethanschäume
- Isocyanat 1:: Polymeres Diphenylmethandiisocyanat (PMDI), Viskosität 200 mPa*s bei 25°C.
- Isocyanat 2:: Polymeres Diphenylmethandiisocyanat (PMDI)-basiert Prepolymer, Viskosität 250 mPa*s bei 25°C.
- Glasfasermatten:: continuous strand mats aus Glasfasern, Unifilo® U809-450 der Firma OwensCorningVetrotex für die Einschäumung in PU-Systemen
- Glashohlkugeln:: iM30K Glashohlkugel der Firma 3M, mit einer Dichte von 600 g/L und einem mittleren Durchmesser von 15 µm

### Herstellung der Polyurethanhartschaumstoffe zur Prüfung

Zur Herstellung des erfindungsgemäßen Hartschaumstoffes wurden die verwendeten Polyole gemäß Tabelle 1 mit Katalysatoren, Stabilisator und Treibmitteln verrührt, anschließend mit dem Isocyanat und ggf. den Glashohlkugeln vermischt und das Reaktionsgemisch in eine Box mit einer Grundfläche von 225 mm x 225 mm gegossen und dort verschäumt. Zur Herstellung der faserverstärkten Hartschaumstoffe, wurde das Reaktionsgemisch in die gleiche Box gegeben, die nun aber mehrere Lagen Glasfasermatten enthielten. Das Reaktionsgemisch drang in die Matten, die als Schaumverstärkung dienen sollen, ein und mit dem in der Box aufsteigenden Schaum quollen die Matten auf und verteilten sich homogen über die gesamte Schaumhöhe. Durch das Treibmittel wurde eine konstante Schaumrohdichte von 100 g/L eingestellt.

Wie aus Tabelle 1 zu sehen ist, führen die erfindungsgemäßen Formulierungen zu Polyurethanhartschäumen mit besonders hohen mechanischen Eigenschaften, sowohl mit als auch ohne Verstärkungsmittel im Schaum.

### Herstellung eines Sandwichelementes

### Variante 1: offene Form

In eine offene Form zur Vakuuminfusion mit den Maßen: 2450x1800x60mm, einem Volumen von 264,6 L und einer Fläche von 4,41 m² werden eine Lage Abreißgewebe und 6 Lagen zur Vakuuminfusion geeignete Glasgelege eingelegt.

Auf die oberste Glasmattenschicht wird ein PU-Versiegelungssystem, bestehend aus
107 Teilen polymerem Diphenylmethandiisocyanat, Fn=2,8, zahlenmittleres Molekulargewicht = 362g/mol,
48,9 Teilen eines Saccharose basierten Polyetherol, Fn=3,9, zahlenmittleres Molekulargewicht = 540g/mol,
22,5 Teilen eines Propylenglykol basierten Polyetherol, Fn=3, zahlenmittleres Molekulargewicht = 420g/mol,
10 Teilen Dipropylenglykol,
15 Teilen Tri-2-Chloropropylphosphat,
0,8 Teilen eines Polysiloxans und
2,5 Teilen Triethanolamin in 1,4 Butandiol (25%ig)
dünn aufgesprüht und härtet aus.

Das Schaumsystem Nr. 2 wird auf die versiegelte Glasmattenschicht aufgetragen, es reagiert, schäumt auf, erstarrt und bedeckt die Glasmattenschicht komplett. Durch die Menge des aufgetragenen Systems und die Zieldichte wird die gewünschte Schichtdicke des Schaumes erreicht. Unebenheiten und eine zu große Schichtdicke des Schaumes an einzelnen Stellen werden mechanisch mit einer Fräse entfernt, so dass eine gleichmäßige Schichtdicke von 6cm Schaum entsteht. Die Fließkanäle für die Harzinfusion werden vorbereitet.
Anschließend werden 6 Lagen Glasgelege, 2 Lagen Abreißgewebe , ein Fließnetz, ein VAP-Gewebe (vacuum assisted process) und wieder ein Fließnetz aufgelegt und die Vakuumfolie als letztes befestigt.

Folgende Materialien wurden zum Aufbau der Vakuuminfusion verwendet:
- Glasgelege:: Biax Glasgelege OCV Flächengewicht 811 g/m² (Saertex)
- Vakuumfolie:: VACFILM450V260 (Vacfilm450V-Tub-0,05mmX1, 50M x 300LM) (FlugzeugUnion Süd)
- Fließnetz:: Entlüftungsnetz 180 g/m² - Art.Nr.: 390184-5 ; 10 m Rolle (20 m²) (R&G Faserverbundwerkstoffe)
- Abreißgewebe:: Abreißgewebe Flächengewicht 95g/m² (R&G Faserverbundwerkstoffe)
- VAP-Membran:: VAP-Membran (Saertex)

An der letzten Schicht werden Infusions- und Entlüftungsschläuche befestigt.
Die Vakuuminfusion der Glasgelege wird mit einem Epoxidharz-System der BASF SE durchgeführt.
- Harz:: Baxxores ER 5400
- Härter:: Baxxodur EC 5430
- Mischungsverhältnis: 100 :: 30 Gew.Teile

Zur Beschleunigung der Aushärtung wird die Form nach der Infusion auf 70°C aufgeheizt. Das fertige Sandwichelement wird entnommen, die Hilfsfolien und -fliese werden mit den Abreißfolien entfernt.
Eine Probe eines entnommenen Schaummusters zeigt die gleichen Eigenschaften wie das geschäumte Blockmuster.

### Variante 1.1

### Faserverstärkter Schaumkern

Statt des Schaumsystems Nr. 2 wird das Schaumsystem Nr. 3 verwendet.
Nach dem Aufsprühen der Sperrschicht werden 7 Lagen der Verstärkungsmatten Unifilo® U809-450 locker in die Form eingelegt und am Rand fixiert. Nach dem Eintragen des PU-Systems Nr. 3 werden die Matten vom flüssigen PU System getränkt. Nach dem Aufschäumen des Systems befinden sie sich exfoliert im Schaumkern. Die weitere Bearbeitung erfolgt wie oben.

### Variante 1.2

Anstelle der 6 Lagen Glasgelege in Variante 1 werden nur 5 Lagen Glasgelege und anschließend 1 Lage eines schaumdicht gewebten Glasfasergewebes eingelegt, das das Schaumsystem nicht durchdringen kann. Die Auftragung des PU-Versiegelungssystems entfällt. Es wird weiter wie bei Variante 1 verfahren.

### Variante 2: geschlossene Form

Es wird wie in Variante 1.2 verfahren. Die Form aus Variante 1 wird mit einem dicht schließenden Deckel und Entlüftungsgängen ausgestattet. Die Menge des einzutragenden Schaumsystems wird so berechnet, dass sich ein Verdichtungsfaktor von 1,1 in der Form ergibt (1,1 fache Einfüllmenge). Damit ergibt sich bei einer freigeschäumten Dichte des Systems von 100g/L im Werkzeug eine Schaumdichte von 110g/L. Nach dem Eintragen des Schaumsystems wird der Werkzeugdeckel geschlossen und nach dem Aushärten des Systems und Öffnen des Deckels wird entsprechend Variante 1 verfahren.

### Variante 2.1

Es wird wie in Variante 2 verfahren, wobei am Deckel 6 Lagen Glasgelege, 2 Lagen Abreißgewebe, ein Fließnetz, ein VAP-Gewebe (vacuum assisted process) und wieder ein Fließnetz und die Vakuumfolie aufgelegt und befestigt werden. Die jeweils außenliegende Glasgelegeschicht ist ein für PU-System undurchdringbares Glasgewebe. Nach der Reaktion des PU Schaumsystems wird die Befestigung der Decklagen von Formdeckel entfernt und der Formdeckel wird geöffnet, die Decklagen inklusive der Vakuumfolie als letzte Schicht verbleiben in der Form auf dem Schaumkern. Die Vakuuminfusion wird entsprechend Variante 1 durchgeführt, anschließend wird das Bauteil entformt.

## Patentansprüche

1. Verfahren zur Herstellung von Sandwichelementen, wobei die Sandwichelemente einen Polyurethanhartschaumstoff als Kernschaum enthalten, der von einem Verstärkungsmittellagen enthaltenden Kunststoffharz ganz oder teilweise umschlossen ist,
bei dem man den Polyurethanhartschaumstoff auf den Verstärkungsmittellagen herstellt und
anschließend die Verstärkungsmittellagen in einem flüssigen Harz tränkt und das Harz aushärtet.

2. Verfahren zur Herstellung von Sandwichelementen nach Anspruch 1 wobei man
i. mindestens zwei Verstärkungsmittellagen in eine Form einlegt,
ii. eine Polyurethanreaktionsmischung zur Herstellung eines Hartschaumstoffs auf die Verstärkungsmittellagen gibt, wobei zumindest eine der Verstärkungsmittellagen für die Polyurethanreaktionsmischung zur Herstellung eines Hartschaumstoffs undurchlässig ist und die undurchlässige Verstärkungsmittellagen nicht die der Form zugewandte Lage ist,
iii. die Polyurethanreaktionsmischung zur Herstellung eines Polyurethanhartschaumstoffs zum Polyurethanhartschaumstoff ausreagieren lässt,
iv. die nicht von Polyurethan durchtränkten Verstärkungsmittellagen evakuiert,
v. flüssiges Harz in den evakuierten Verstärkungsmittellagen eindringen lässt, das flüssige Harz aushärtet und
vi. das erhaltene Sandwichelement entformt.

3. Verfahren nach Anspruch 1 oder 2, **dadurch gekennzeichnet, dass** die für die Polyurethanreaktionsmischung undurchlässige Verstärkungsmittellage durch Aufbringen und ausreagieren einer Polyurethanreaktionsmischung abgedichtet ist.

4. Verfahren nach einem der Ansprüche 1 bis 3, **dadurch gekennzeichnet, dass** das flüssige Harz eine Polyurethanreaktionsmischung, eine Epoxydharzreaktionsmischung, eine Polyesterharzreaktionsmischung, Polyamidharzreaktionsmischung oder Polyisocyanuratharzreaktionsmischung ist.

5. Verfahren nach einem der Ansprüche 1 bis 4, **dadurch gekennzeichnet**, Verfahren nach einem der Ansprüche 1 bis 5, **dadurch gekennzeichnet, dass** der Polyurethanhartschaumstoff eine Geschlossenzelligkeit von mindestens 60 % der Zellen aufweist.

6. Verfahren nach einem der Ansprüche 1 bis 6, **dadurch gekennzeichnet, dass** der Polyurethanschaumstoff Verstärkungsmittel enthält.

7. Verfahren nach einem der Ansprüche 1 bis 7, **dadurch gekennzeichnet, dass** der Polyurethanschaumstoff erhalten wird durch Vermischen von
a) Polyisocyanaten mit
b) Verbindungen mit gegenüber Isocyanaten reaktiven Gruppen
c) Treibmittel, enthaltend Wasser, und gegebenenfalls
d) Katalysator und
e) weiteren Additiven,
zu einer Reaktionsmischung und Aushärten der Reaktionsmischung.

8. Verfahren nach einem der Ansprüche 1 bis 8, **dadurch gekennzeichnet, dass** die Polyurethanreaktionsmischung zur Herstellung des Polyurethanhartschaumstoffs durch Gießen oder Sprühen auf die für die Reaktionsmischung undurchdringliche Verstärkungsmittellage sowie gegebenenfalls vorhandenen weiteren Verstärkungsmittellagen aufgetragen und zum Polyurethanhartschaumstoff ausreagiert wird.

9. Verfahren nach Anspruch 9, **dadurch gekennzeichnet, dass** der erhaltene Polyurethanhartschaumstoff an der Oberfläche geglättet wird und weitere Verstärkungsmittellagen aufgelegt werden, bevor gemäß Schritt iv) die nicht von Polyurethan durchtränkten Verstärkungsmittellagen evakuiert werden.

10. Verfahren nach einem der Ansprüche 1 bis 9, **dadurch gekennzeichnet, dass** die Form ein Formunterteil und ein Formoberteil aufweist, die im geschlossenen Zustand einen abgeschlossenen Raum bilden, und wobei man in Schritt (i) sowohl in das Formunterteil als auch in das Formoberteil mindestens zwei Verstärkungsmittellagen eingelegt, die Form schließt und in Schritt (ii) die Polyurethanreaktionsmischung zur Herstellung eines Polyurethanhartschaumstoffs in dem Hohlraum zwischen Formoberteil und Formunterteil zum Polyurethanhartschaumstoff ausreagiert, wobei zumindest jeweils eine der Verstärkungsmittellagen im Formunterteil und im Formoberteil für die Polyurethanreaktionsmischung zur Herstellung eines Hartschaumstoffs undurchlässig ist und die undurchlässige Verstärkungsmittellage nicht die der Form zugewandte Lage ist.

11. Verfahren nach einem der Ansprüche 1 bis 11, **dadurch gekennzeichnet, dass** Verstärkungsmittellagen Glasfasermatten sind.

12. Verfahren nach einem der Ansprüche 1 bis 12, **dadurch gekennzeichnet, dass** das Sandwichelement ein Volumen von mindestens 0,1 m³ aufweist.

13. Sandwichelement, erhältlich nach einem Verfahren gemäß einem der Ansprüche 1 bis 13.

14. Verwendung eines Sandwichelements nach Anspruch 14 als Windrotorflügel, Tragfläche von Fluggeräten, Gondel für Windkraftanlagen, Bootsrumpf oder Gehäuse von Fahrzeugen.
